# EUROPÄISCHE PATENTANMELDUNG

(11) **EP 0 524 533 A2**
(43) Veröffentlichungstag der Anmeldung: **27.01.1993**
(21) Anmeldenummer: 92112026.7
(22) Anmeldetag: 15.07.1992
(51) Int. Cl.: G01C 1/02, G01C 15/00, F41G 1/35

(54) **Richtaufsatz für ein Zielfernrohr eines optischen Systems**

(30) Priorität: 16.07.1991 DE 4123449; 22.10.1991 DE 9113115 U
(71) Anmelder: Gall, Frans, D-58515 Lüdenscheid (DE)
(72) Erfinder: Gall, Frans, D-58515 Lüdenscheid (DE)
(74) Vertreter: Hassler, Werner, Dr.

(57) **Zusammenfassung**

Ein Richtaufsatz für ein Zielfernrohr eines optischen Systems, das um eine Vertikalachse und/oder eine Horizontalachse schwenkbar ist und eine Zielvorrichtung enthält. Das technische Problem ist eine solche Ausgestaltung des Laserträgers, daß derselbe bei einem handelsüblichen Zielfernrohr universell anwendbar ist. Der Richtaufsatz (7) ist auf eine Frontfassung (5) des Zielfernrohrs aufsetzbar und nimmt eine Halterung (20) für ein Lasergehäuse (8) auf, dessen Laserstrahl auf die optische Achse (15) des Zielfernrohrs (4) ausrichtbar ist.

## Beschreibung

Die Erfindung betrifft einen Richtaufsatz für das Zielfernrohr eines optischen Systems , das um eine Vertikalachse und/oder eine Horizontalachse schwenkbar ist und eine Zielvorrichtung enthält.

Ein optsches Systems kann insbesondere ein geodätisches Instrument sein und ist im Folgendes als solches angesprochen. Doch kann es sich auch um eine anderes Abbildsystem oder Projektionssysstem handeln. Die Zielvorrichtung ist häufig als Fadenkreuz ausgebildet.

Bekannt ist ein Zielfernrohr mit einem sogenannten Laserokular, bei dem ein Laserstrahl über ein Prisma in den Strahlengang eingelenkt wird. Diese Anordnung ist aufwendig und benötigt einen speziellen Okularaufsatz. Ein nachträglicher Anbau eines Lasers oder eine Umrüstung des Zielfernrohrs ist aufwendig, teuer und in der Anwendung schwierig.

Aufgabe der Erfindung ist eine solche Ausgestaltung des Laserträgers, daß derselbe bei einem handelsüblichen Zielfernrohr universell anwendbar ist und derselbe beim Blick durch das Zielfernrohr unsichtbar ist.

Diese Aufgabe wird nach der Erfindung dadurch gelöst, daß der Richtaufsatz auf eine Frontfassung eines Zielfernrohrs aufsetzbar ist und eine Halterung für ein Lasergehäuse, dessen Lasserstrahl auf die optische Achse des Zielfernrohrs ausrichtbar ist, aufnimmt.

Die Erfindung unterscheidet sich insofern vom Stand der Technik, als der Richtaufsatz mit dem Laser auf die Frontfassung des Zielfernrohrs aufsteckbar oder aufsetzbar ist. Der Richtaufsatz kann also bei einem beliebigen geodätischen Instrument z.B. einem Theodoliten oder einem anderen optischen System eingesetzt werden. Ein jeweiliger Anbau oder Abbau oder ein Auswechseln des Richtaufsatzes ist jederzeit möglich. Das optische System beziehungsweise das Zielfernrohr läßt sich auch ohne Laser verwenden. Das Lasergehäuse it der Laserlichtquelle befindet sich in der optischen Achse des Fernrohrs. Die Sicht durch das Fernrohr und die Abbildung desselben wird dadurch nicht behindert oder gestört.

Eine leichte und anpassungsfähige Ausbildung erreicht man dadurch, daß der Laser als Diodenlaser ausgebildet ist. Ein solcher Diodenlaser kann mit einer autonomen Stromquelle arbeiter, er läßt sich jedoch auch an die Stromquelle des geodätischen Instruments anschließen, da der Leistungsbedarf des Diodenlasers gering ist. Ein solcher Diodenlaser hat einen Durchmesser von etwa 10 mm oder weniger und eine Länge von etwa 50 mm oder weniger. Insgesamt hat der Diodenlaser etwa Kugelschreibergröße. Er hindert den Strahlengang des Fernrohrs nicht merkbar.

Die Einstellung und Ausrichtung des Laserstrahl wird dadurch erleichtert, daß derselbe eine auf die optische Achse ausgerichtete Aufnahme und eine weitere verstellbare Aufnahme aufweist.

Eine Weiterbildung des Richtaufsatzes zeichnet sich dadurch aus, daß die Halterung als Ring ausgebildet ist, dessen auf die optische Achse ausgerichtetes Zentrum ein Lasergehäuse aufnimmt und der gegenüber der optischen Achse allseitig justierbar ist.

Eine stabile Aufnahme erreicht man dadurch, daß der Ring an Speichen eine Nabe zur Aufnahme des Lasergehäuses hält.

Eine optimale Verstellung erreicht man dadurch, daß der Ring an mindestens drei in Umfangsrichtung versetzten Stellen durch Verbindungen an der Frontfassung gehalten ist.

Eine einfache Konstruktion ergibt sich dadurch, daß mindestens zwei Verbindungen in Axialrichtung der Zielfernrohrs verstellbar sind. Man kann also alle drei Verbindungen oder nur zwei Verbindungen verstellbar ausbilden.

Eine Verbesserung der optischen Einstellbarkeit erhält man dadurch, daß an dem Lasergehäuse eine Fokussierungseinrichtung für den Laserstrahl vorgesehen ist.

Mit dem Laser lassen sich trigonometrische Messungen nach dem Vorwärtseinschneidverfahren und mit Entfernungsmessung dadurch erleichtern, daß zur trigonometrischen Entfernungsmessung einerseits eine Fadenkreuzblende und andererseits eine Kreuzspaltblende auf den Laser aufsetzbar ist. Man kann auch komplementäre Kreissektorblenden vorsehen.

Ausführungsbeispiele der Erfindung werden im Folgenden anhand der Zeichnungen erläutert, in denen darstellen:
Fig. 1 einen Theodolit in schematischer Gesamtansicht,
Fig. 2 einen Blendensatz für trigonometrische Messungen,
Fig. 3 einen abgewandelten Blendensatz,
Fig. 4 einen Theodolit in schematischer Gesamtansicht,
Fig. 5 eine Einzeldarstellung des Richtaufsatzes und
Fig. 6 eine Seitenansicht zu Fig 5.

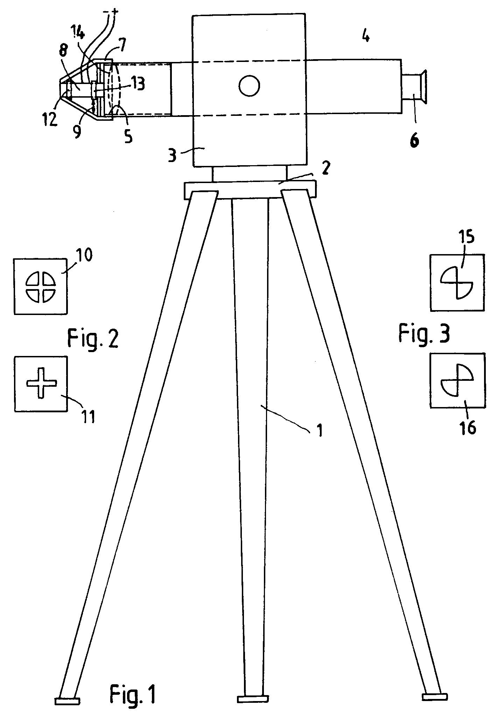

Fig. 1 zeigt ein geodätisches Instrument in Form eines Theodoliten. Der Theodolit ist auf einem Stativ 1 mit einem horizontierbaren Tisch 2 aufgebaut. Auf dem Tisch 2 ist ein Theodolit 3 befestigt, dessen Zielfernrohr 4 um eine Vertikalachse und eine Horizontalachse über den vollen Raumbereich verschwenkbar ist. Zwischen einer Frontfassung 5 und einem Okular 6 befindet sich die Optik des Zielfernrohrs 4 mit dem Objektiv 14 und einem Fadenkreuz, das auf die optische Achse ausgerichtet ist. Der Theodolit 1 ist in üblicher Weise mit einer Ablese- und Registriereinrichtung für den Horizontal- und Vertikalwinkel ausgestattet. Eine Stromquelle für den Theodoliten 1 ist nicht dargestellt.

Auf die Frontfassung 5 des Theodoliten oder des Objektivs ist eine Halterung 7 für einen Diodenlaser 8 aufsetzbar. Eine erste Aufnahme 12 ist auf die optische Achse des Zielfernrohrs 4 ausgerichtet. Eine weitere Aufnahme 13 ist mittels einer Stelleinrichtung 9 verstellbar, z.B. kreuzschlittenartig verstellbar, so daß sich der Diodenlaser 8 auf die optische Achse des Fernrohrs 4 ausrichten läßt. Der Diodenlaser liegt nach der Ausrichtung vor dem Objektiv koaxial in der optischen Achse. Der Diodenlaser kann mit einer autonomen Stromquelle ausgestattet sein. In anderer Weise können die elektrischen Anschlußleitungen des Diodenlasers 8 auch an die Stromquelle des Theodoliten 1 angeschlossen sein. Der Diodenlaser hat einen Durchmesser von etwa 10 mm oder weniger und eine Länge von etwa 50 mm oder weniger. Der dünne, in der Größe mit einem Kugelschreiber vergleichbare, vor dem Objektiv auf der optischen Achse angeordnete Diodenlaser behindert den Strahlengang nicht, so daß die Abbildung des Fernrohrs nicht beeinträchtigt wird. Dieses gilt auch für die Entfernungsmessung mit Infrarotlicht.

Der Diodenlaser 8 wird dadurch auf die optische Achse justiert, daß zunächst mit dem Fadenkreuz des Zielfernrohres 4 ein Punkt angepeilt wird. Dann wird mit der Stelleinrichtung der Lichtstrahl des Diodenlasers auf den angepeilten Punkt gerichtet und dadurch auf die optische Achse justiert. Eine Nachprüfung und Nachjustierung der Ausrichtung ist jederzeit möglich.

Nach Ausrichtung auf die optische Achse ermöglicht der Diodenlasar 8 die Ausrichtung des Zielfernrohrs 4 auf einen beliebigen anzupeilenden Punkt ohne Benutzung des Fadenkreuzes. Dieses stellt eine wesentliche Vereinfachung dar. Nach Ausrichtung des Fernrohrs 4 und Registrierung der Winkel kann die Entfernung dieses Punktes gemessen werden.

Der Diodenlaser 8 ermöglicht auch eine trigonometrische Vermessung nach dem Verfahren des Vorwärtseinschneidens unter Verwendung von zwei Theodoliten. Von beiden Theodoliten wird der einzumessende Punkt angepeilt. Die beiden Diodenlaser können wechselweise eine Fadenkreuzblende 10 oder eine Kreuzspaltblende 11 erhalten. Bei der Fadenkreuzblende 10 ist ein Fadenkreuz ausgeblendet. Der Kreuzspalt läßt sich mit dem Fadenkreuz zur Deckung bringen, so daß nach Überdeckung ein voller Kreis durch das Laserlicht bedeckt ist. Diese Einstellung ist sehr empfindlich. So erleichtert der Diodenlaser auch trigonometrische Vermessungen.

Nach Fig. 3 kann man zwei komplementäre Kreisektorblenden 15 und 16 vorsehen, deren Blendensektoren zu einem Vollkreis zur Überdeckung kommen. Beim Vorwärtseinschneiden kann man so beide Zielfernrohre genau auf einen Punkt ausrichten. Die Koordinaten dieses Punktes lassen sich nach üblichen Methoden berechnen.

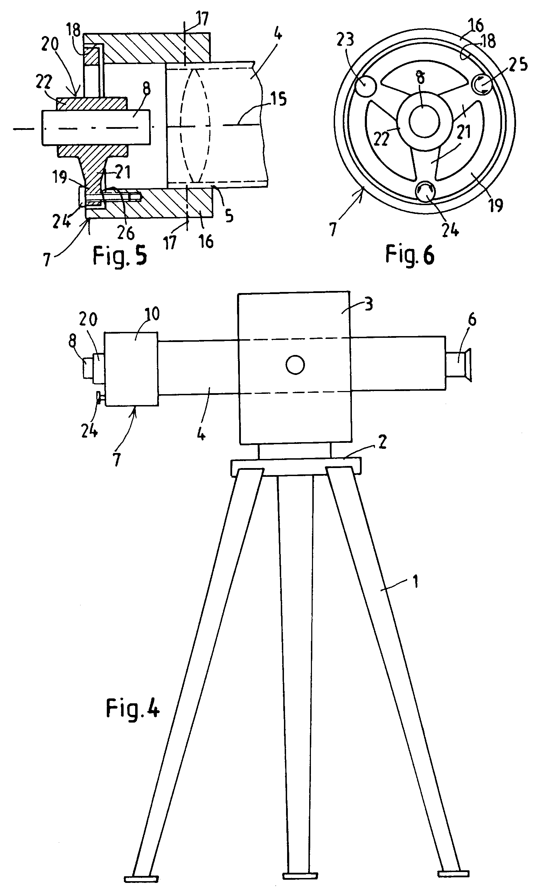

Nach einem abgewandeltes Ausführungsbeispiel gemäß den Fig. 4 bis 6 ist auf die Frontfassung 5 ein Mantel 16 eines Richtaufsatzes 7 aufgesetzt. Der Mantel 16 ist durch Klemmschrauben 17, einen Klemmring oder eine andere Klemmvorrichtung gesichert. Der Mantel 16 hat stirnseitig eine Ringstufe 18, die einen Ring 19 einer scheibenförmigen Halterung aufnimmt. Der Ring 19 trägt an Speichen 21 eine Nabe 22 zur Aufnahme eines Lasergehäuses 8 eines Diodenlasers oder eines anderen Lasers. Das Zentrum des Ringes 19 ist auf die optische Achse 15 des Zielfernrohrs 4 ausgerichtet. Der Ring 19 ist durch mindestens drei Verbindungen 23, 24, 25 mit dem Mantel 16 verbunden. Die Verbindungen 23, 24, 25 sind als Schraubverbindungen dargestellt. Es können alle drei Verbindungen in Richtung der optischen Achse verstellbar ausgebildet sein. In anderere Weise kann auch eine Verbindung 23 fest ausgebildet sein, und die beiden anderen Verbindungen 24 und 25 sind in Richtung der optischen Achse 15 verstellbar. Zur spielfreien Führung und Lagefixierung sind die Verbindungen mit Federelementen 26 ausgestattet, die den Ring 19 gegen Anlageflächen der Verbindungen spannen.

Der Laserstrahl des Lasers 8 muß auf die optische Achse 15 des Zielfernrohrs 4 ausgerichtet werden. Da das Zentrum des Rings 19 auf der Achse des Zielfernrohrs liegt, liegt das Zentrum des Rings auch auf der optischen Achse 15 des Zielfernrohrs. Es kann jedoch ein Winkelfehler des Laserstrahl gegenüber der optischen Achse vorliegen. Dieser Winkelfehler läßt sich durch Einstellen der Verbindungen 23, 24 und/oder 25 beheben. Dadurch läßt sich der Laserstrahl innnerhalb des Raumwinkelbereichs ausrichten und mit der optischen Achse des Zielfernrohrs in Überdeckung bringen. Diese Einstellung ist jederzeit durch Peilung mit dem Fadenkreuz des Zielfernrohres 4 möglich. Durch Verstellen der Verbindungen wird der Laserstrahl auf den angepeilten Punkt gerichtet und dadurch auf die optische Achse justiert. Eine Nachprüfung und Nachjustierung der Ausrichtung ist jederzeit möglich.

Nach der Justierung erfolgt die Ausrichtung des Zielfernrohrs 4 auf einen beliebigen anzupeilenden Punkt durch Nachführung des Laserstrahls ohne Benutzung des Fadenkreuzes. Dieses stellt eine wesentliche Vereinfachung dar. Nach Ausrichtung des Fernrohrs 4 und Registrierung der Winkel kann die Entfernung dieses Punktes gemessen werden.

Man kann an dem Lasergehäuse auch eine Fokussierungseinrichtung für den Laserstrahl vorsehen.

## Patentansprüche

1. Richtaufsatz für das Zielfernrohr eines optischen Systems, dessen Zielfernrohr um eine Vertikalachse und/oder eine Horizontalachse schwenkbar ist und eine Zielvorrichtung enthält, dadurch gekennzeichnet, daß der Richtaufsatz (7) auf eine Frontfassung (5) des Zielfernrohrs aufsetzbar ist und eine Halterung (20) für ein Lasergehäuse (8),dessen Laserstrahl auf die optische Achse (15) des Zielfernrohrs (4) ausrichtbar ist, aufnimmt.

2. Richtaufsatz nach Anspruch 1, dadurch gekennzeichnet, daß der Laser als Diodenlaser (8) ausgebildet ist.

3. Richtaufsatz nach Anspruch 1 oder 2, dadurch gekennzeichnet, daß derselbe eine auf die optische Achse ausgerichtete Aufnahme (12) und eine weitere verstellbare Aufnahme (13) aufweist.

4. Richtaufsatz nach Anspruch 1, dadurch gekennzeichnet, daß die Halterung (20) als Ring (19) ausgebildet ist, dessen auf die optische Achse ausgerichtetes Zentrum ein Lasergehäuse (8) aufnimmt und der gegenüber der optischen Achse (15) allseitig justierbar ist.

5. Richtaufsatz nach Anspruch 1 oder 4, dadurch gekennzeichnet, daß der Ring (19) an einer oder mehreren Speichen (21) eine Nabe (22) zur Aufnahme des Lasergehäuses (8) hält.

6. Richtaufsatz nach einem der Ansprüche 1, 4 oder 5, dadurch gekennzeichnet, daß der Ring (19) an mindestens drei in Umfangsrichtung versetzten Stellen durch Verbindungen (23, 24, 25) an der Frontfassung (5) gehalten ist.

7. Richtaufsatz nach einem der Ansprüche 1, 4 bis 6, dadurch gekennzeichnet, daß mindestens zwei Verbindungen (24, 25) in Axialrichtung der Zielfernrohrs verstellbar sind.

8. Richtaufsatz nach einem der Ansprüche 1, 4 bis 7, dadurch gekennzeichnet, daß am oder im Lasergehäuse (8) eine Fokussierungseinrichtung für den Laserstrahl vorgesehen ist.

9. Zielfernrohr nach einem der Ansprüche 1 bis 8, dadurch gekennzeichnet, daß zur trigonometrischen Entfernungsmessung einerseits eine Fadenkreuzblende (10) und andererseits eine Kreuzspaltblende (11) oder eine Lochblende oder Röhrenblende auf einen Laser aufsetzbar ist.

10. Zielfernrohr nach einem der Ansprüche 1 bis 9, dadurch gekennzeichnet, daß zur trigonometrischen Entfernungmessung einerseits eine Kreissektorblende (15) und andererseits eine komplementäre Kreissektorblende (16) auf den jeweiligen Laser aufsetzbar sind.
